# EUROPÄISCHE PATENTSCHRIFT

(11) **EP 1 527 963 B1**
(45) Veröffentlichungstag und Bekanntmachung des Hinweises auf die Patenterteilung: **30.08.2006**
(21) Anmeldenummer: 04023392.6
(22) Anmeldetag: 01.10.2004
(51) Int. Cl.: B60R 21/20

(54) **Gassackmodul**
Air bag module
Module de coussin gonflable

(30) Priorität: 31.10.2003 DE 20316817 U
(43) Veröffentlichungstag der Anmeldung: 04.05.2005
(73) Patentinhaber: TRW Automotive Safety Systems GmbH, 63743 Aschaffenburg (DE)
(72) Erfinder: Hauer, Constantin, 63825 Schöllkrippen (DE); Limberger, Alexander, 63071 Offenbach/Main (DE)
(74) Vertreter: Strass, Jürgen

(56) Entgegenhaltungen:
- DE-A- 10 036 759
- US-A- 6 155 594

## Beschreibung

Die Erfindung betrifft ein Gassackmodul, mit einem Gassack mit einer Vorderwand, wobei ein Zentrumsabschnitt der Vorderwand an einem Teil des Gassackmoduls befestigt und bei einer Entfaltung des Gassacks an einer freien Bewegung gehindert ist.

Bei derartigen Gassackmodulen, die hauptsächlich in Lenkrädern Verwendung finden, entfaltet sich der Gassack ringförmig um einen im wesentlichen feststehenden Mittelteil eines Gassackmoduls. Die innere Öffnung des Rings wird dabei durch geeignete Mittel, die dem Fachmann bekannt sind, soweit verschlossen, daß im aufgeblasenen Zustand des Gassacks kein Körperteil eines Fahrzeuginsassen unbeabsichtigt darin eindringen kann.

Der Vorteil dieser Art von Gassackmodulen liegt darin, daß vermieden wird, daß sich Teile einer Abdeckkappe frei oder nur an Fangbändern gehalten durch den Fahrzeuginnenraum bewegen. Dies gilt insbesondere für den Mittelteil der Abdeckkappe, der oft genutzt wird, um schwere und voluminöse Embleme, z.B. ein Logo des Fahrzeugherstellers, zu befestigen.

Auch bei solchen Gassackmodulen stellt sich jedoch die Aufgabe, bei der Aktivierung des Gassackmoduls die Austrittsöffnung für den Gassack sicher in möglichst kurzer Zeit freizugeben.

Aus der DE 100 36 759 A1, die dem Oberbegriff des Anspruchs 1 entspricht, ist bekannt, den mittleren Teil der Abdeckkappe bei der Entfaltung des Gassacks anzuheben und so eine ringförmige Austrittsöffnung zu schaffen. Das Anheben geschieht durch einen unterhalb des Mittelteils der Abdeckkappe liegenden Diffusor, der zwei teleskopartig ineinander gesteckte Segmente aufweist, die sich bei der Aktivierung des Gassackmoduls durch den Gasdruck des aus dem Gasgenerator austretenden Gases auseinander schieben.

Die Erfindung schafft ein Gassackmodul, bei dem ein schnelles Freigeben der Austrittsöffnung und ein sicheres Entfalten des Gassacks gewährleistet ist.

Dies wird durch ein Gassackmodul mit einem Gassack mit einer Vorderwand erreicht, wobei ein Zentrumsabschnitt der Vorderwand an einem Teil des Gassackmoduls befestigt und bei einer Entfaltung des Gassacks an einer freien Bewegung gehindert ist. Das erfindungsgemäße Gassackmodul umfaßt ferner einen Diffusor, unter dem ein Gasgenerator angeordnet ist, wobei der Diffusor ein modulfestes erstes Diffusorelement und ein gegenüber dem ersten Diffusorelement um einen vorbestimmten begrenzten Verschiebeweg in einer Axialrichtung verschiebliches zweites Diffusorelement aufweist und eine Abdeckkappe mit einem mittleren Abschnitt, der über wenigstens ein Befestigungsmittel am zweiten Diffusor-element befestigt ist, wobei der Zentrumsabschnitt zwischen dem mittleren Abschnitt oder Abdeckkappe und einer Deckplatte des zweiten Diffusorelements über eine Schraubverbindung fest befestigt ist. Die Diffusorelemente sind so ausgebildet, daß das zweite Diffusorelement relativ zum ersten Diffusorelement nicht in einer Umfangsrichtung verschiebbar ist. Durch diese Gestaltung wird eine Verdrehung der Diffusorelemente relativ zueinander senkrecht zur Richtung des Verschiebewegs verhindert. So ist gewährleistet, daß der Gassack nach seiner Entfaltung eine exakt definierte Lage im Raum einnimmt.

In einer bevorzugten Ausführungsform der Erfindung ist die Verdrehsicherung dadurch gebildet, daß ein Abschnitt eines Diffusorelements durch eine am anderen Diffusorelement vorgesehene Ausströmöffnung hindurchgreift.

Außerdem kann der Abschnitt einen Anschlag zur Begrenzung des Verschiebewegs bilden, so daß das bewegliche zweite Diffusorelement vom fahrzeugfesten ersten Diffusorelement nach Zurücklegen des Verschiebewegs sozusagen aufgefangen werden kann.

In einer weiteren bevorzugten Ausführungsform weisen die Diffusorelemente in einer Ebene senkrecht zur Axialrichtung ineinandergreifende Strukturen auf, die einen Relativbewegung der beiden Diffusorelemente verhindern. In diesem Fall ist die Verdrehsicherung durch eine von der Kreisform abweichende Umfangsgeometrie in einer Ebene senkrecht zur Axialrichtung bzw. zum Verschiebeweg realisiert.

An den Diffusorelementen können z.B. in eine Radialrichtung weisende Vorsprünge ausgebildet sein.

Die verschiedenen Arten der Verdrehsicherung lassen sich natürlich auch miteinander kombinieren.

Im ersten und/oder im zweiten Diffusorelement können Ausströmöffnungen vorgesehen sein, die während der Verschiebung des zweiten Diffusorelements freigegeben werden. Dies ist günstig, um z.B. zumindest einen Teil des aus dem Gasgenerator austretenden Gases zuerst dazu zu verwenden, das zweite Diffusorelement anzuheben und hierüber die Abdeckkappe zu öffnen oder anzuheben. Außerdem läßt sich so in der Anfangsphase der Entfaltung des Gassacks gezielt das Einströmen des Gases in den Gassack bestimmen.

Das zweite Diffusorelement kann im wesentlichen gasdicht ausgebildet sein. In diesem Fall wird zuerst der Mittelteil der Abdeckkappe angehoben, bevor das Gas beginnt, in den Gassack zu strömen und diesen zu entfalten.

In einer anderen Ausführungsform ist vorgesehen, daß das zweite Diffusorelement Ausströmöffnungen aufweist, die zumindest abschnittsweise nie vom ersten Diffusorelement verdeckt sind. Hier strömt also bereits direkt nach der Aktivierung des Gassackmoduls vom Gasgenerator erzeugtes Gas in den Gassack über. Die Kraft des sich entfaltenden Gassacks kann zumindest teilweise zum Anheben und Öffnen der Abdeckkappe beitragen.

Bevorzugt wird das zweite Diffusorelement durch das erste Diffusorelement während der Bewegung entlang des Verschiebewegs geführt.

In einer Ausführungsform ist der mittlere Abschnitt der Abdeckkappe über Sollbruchstellen oder Scharniere mit der restlichen Abdeckkappe verbunden. In diesem Fall wird eine ringförmige Austrittsöffnung für den Gassack rings um den mittleren Teil der Abdeckkappe freigegeben.

Alternativ ist es möglich, bei der Entfaltung des Gassacks die gesamte Abdeckkappe anzuheben. Auch hier wird eine ringförmige Austrittsöffnung für den Gassack freigegeben, die allerdings z.B. durch einen zwischen einem Rand der Abdeckkappe und einem Modulgehäuse geöffneten Spalt gebildet ist. Der Vorteil hierbei ist, daß auf Scharniere oder Sollbruchstellen im Bereich der von außen sichtbaren Frontseite der Abdeckkappe verzichtet werden kann.

Bevorzugt ist ein Abschnitt eines Generatorträgers und/oder ein Rand einer Einblasöffnung des Gassacks zwischen einem am ersten Diffusorelement ausgebildeten Ring und dem Modulgehäuse geklemmt. Auf diese Weise kann auf ein separates Gassackhalteelement verzichtet werden, da ein Abschnitt des ersten Diffusorelements diese Aufgabe übernimmt.

Der Gasgenerator kann schwingend gelagert sein. Der hierfür notwendige Platz läßt sich einfach unter dem zweiten Diffusorelement in dessen Grundstellung vor der Aktivierung des Gassackmoduls zur Verfügung stellen.

Weitere Merkmale und Vorteile der Erfindung ergeben sich aus der nachfolgenden Beschreibung mehrerer Ausführungsbeispiele in Verbindung mit den beigefügten Figuren. In diesen zeigen:
- Figur 1eine schematische halbseitige Schnittansicht eines erfindungsgemäßen Gassackmoduls gemäß einer ersten Ausführungsform;
- Figur 2 eine halbseitige schematische Schnittansicht eines erfindungsgemäßen Gassackmoduls gemäß einer zweiten Ausführungsform;
- Figur 3auf der rechten Seite eine halbseitige schematische Schnittansicht eines erfindungsgemäßen Gassackmoduls gemäß einer dritten Ausführungsform und auf der linken Seite eine schematische halbseitige Schnittansicht eines erfindungsgemäßen Gassackmoduls gemäß einer Variante der dritten Ausführungsform;
- Figur 4eine schematische Schnittansicht entlang der Linie IV-IV in Figur 1 gemäß einer ersten Variante;
- Figur 5eine schematische Schnittansicht entlang der Linie IV-IV in Figur 1 gemäß einer zweiten Variante; und
- Figur 6eine schematische Schnittansicht entlang der Linie IV-IV in Figur 1 gemäß einer dritten Variante.

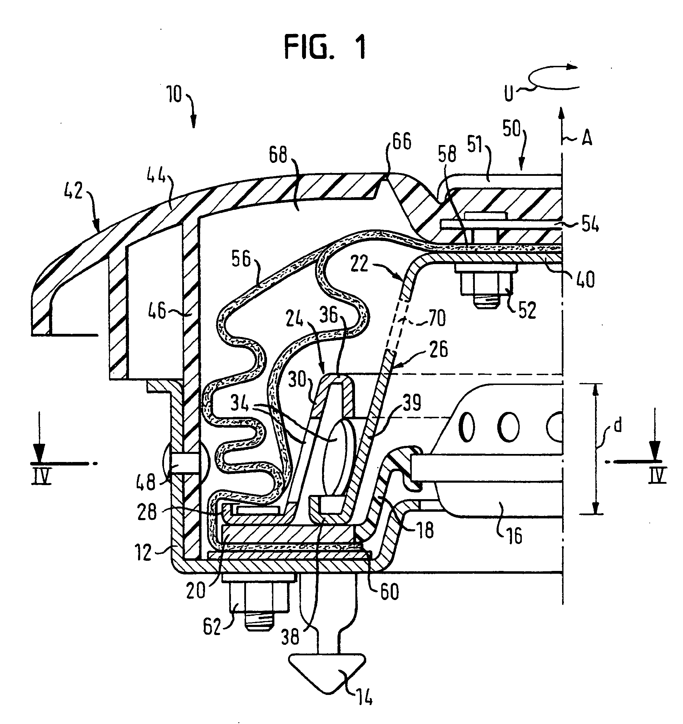

Das in Figur 1 gezeigte Gassackmodul 10 enthält ein Modulgehäuse 12, an dessen Boden Rastelemente 14 zur Befestigung des Gassackmoduls 10 in einem Lenkrad vorgesehen sind. Im Modulgehäuse 12 ist ein schwingend gelagerter Gasgenerator 16 aufgenommen, der über ein elastisches ringförmiges Element 18 mit einem flachen ringförmigen Flansch 20 verbunden ist. Der Flansch 20 erfüllt hier die Aufgabe eines Generatorträgers.

Der Gasgenerator 16 ist unter einem zweiteiligen Diffusor 22 angeordnet, der ein erstes, modulfestes Diffusorelement 24 und ein zweites, gegenüber dem ersten Diffusorelement 24 um einen vorbestimmten Verschiebeweg d parallel zu einer Axialrichtung A des Gassackmoduls 10 verschiebliches zweites Diffusorelement 26 aufweist.

Das radial außen liegende erste Diffusorelement 24 hat an seinem radial nach außen gerichteten, zum Boden des Modulgehäuses 12 weisenden Fuß einen Ring 28, der auf dem Flansch 20 aufliegt und diesen sowie einen Rand 60 einer Einblasöffnung eines gefaltet im Modulgehäuse 12 aufgenommenen Gassacks 56 über an sich bekannte Befestigungselemente 62 mit dem Modulgehäuse 12 verbindet. Über die Befestigungselemente 62 ist auch das erste Diffusorelement 24 fest mit dem Modulgehäuse 12 und über dieses fest mit dem Lenkrad verbunden.

An den Ring 28 schließt sich radial nach innen ein kegelstumpfförmiger Abschnitt 30 an, der mit radial gerichteten Ausströmöffnungen 34 versehen ist.

In Axialrichtung A nach oben endet das erste Diffusorelement 24 in einem ringförmigen, radial nach innen umgebogenen Rand 36.

Das zweite Diffusorelement 26 hat am in Axialrichtung A gesehenen unteren, d.h. einem Boden des Modulgehäuses 12 zugewandten, Ende einen radial nach außen umgebogenen Rand 38, der in seiner Form zum Rand 36 des ersten Diffusorelements 24 komplementär ist. An den Rand 38 schließt sich ein kegelstumpfförmiger Abschnitt 39 an, der am in Axialrichtung A oberen Ende des zweiten Diffusorelements 26 in eine flache Deckelplatte 40 übergeht.

Das Gassackmodul 10 ist nach außen, d.h. in einem im Lenkrad eingebauten Zustand in Richtung eines Fahrzeuginnenraums, durch eine Abdeckkappe 42 abgeschlossen. Die Abdeckkappe 42 ist über senkrecht von einer Stirnwand 44 abstehende Seitenwände 46 mittels einer Nietverbindung 48 fest am Modulgehäuse 12 befestigt. Die Abdeckkappe 42 besteht hauptsächlich aus einem geeigneten Kunststoff.

Ein mittlerer Abschnitt 50 der Abdeckkappe 42, an dem hier ein Emblem 51 befestigt ist, ist über eine Schraubverbindung 52 fest mit der Deckelplatte 40 des zweiten Diffusorelements 26 verbunden. In das Kunststoffmaterial des mittleren Abschnitts 50 der Abdeckkappe 42 ist ein Metalleinleger 54 eingegossen oder eingespritzt, an dem die Schraubverbindung 52 angreift. Auf diese Weise ist der mittlere Abschnitt 50 fest am Gassackmodul 10 befestigt und bei einer Aktivierung des Gassackmoduls 10 an einer freien Bewegung gehindert.

Ein Zentrumsabschnitt 58 einer Vorderwand des Gassacks 56 ist zwischen dem mittleren Abschnitt 50 der Abdeckkappe 42 und der Deckelplatte 40 des zweiten Diffusorelements 26 über die Schraubverbindung 52 fest befestigt, so daß auch dieser bei der Aktivierung des Gassackmoduls 10 und der Entfaltung des Gassacks 56 an einer freien Bewegung gehindert ist. Aufgeblasen hat der Gassack 56 eine ringförmige Gestalt, wobei über dem mittleren Abschnitt 50 der Abdeckkappe 42 eine Einbuchtung ausgebildet ist. Diese Gestalt des Gassacks 56 ist hier nicht dargestellt, dem Fachmann aber bekannt.

Der Diffusor 22 ist so ausgebildet, daß das zweite Diffusorelement 26 sich in Axialrichtung A gegenüber dem ersten Diffusorelement 24 entlang einem vorbestimmten begrenzten Verschiebeweg d bewegen kann. Durch das Anheben des zweiten Diffusorelements 26 wird auch der fest damit verbundene mittlere Abschnitt 50 der Abdeckkappe 42 angehoben. Nach Zurücklegen des Verschiebewegs d gelangt der Rand 38 des zweiten Diffusorelements 26 in Eingriff mit dem Rand 36 des ersten Diffusorelements 24, der als Anschlag wirkt und so die Bewegung des zweiten Diffusorelements 26 stoppt. Die Bewegung des zweiten Diffusorelements 26 wird bei der Aktivierung des Gassackmoduls 10 durch den im Inneren des Modulgehäuses 12 erhöhten Innendruck ausgelöst, der durch das aus dem Gasgenerator 16 ausströmende Gas erzeugt wird.

In der in Figur 1 gezeigten ersten Ausführungsform reißt beim Anheben des zweiten Diffusorelements 26 die Abdeckkappe 42 an Sollbruchstellen 66 auf, die den mittleren Abschnitt 50 umgeben, so daß eine ringförmige Austrittsöffnung 68 für den Gassack 56 freigegeben wird.

In einer ersten Variante ist das zweite Diffusorelement 26 im wesentlichen gasdicht ausgeführt, so daß das aus dem Gasgenerator 16 ausströmende Gas zunächst keinen offenen Weg in den Gassack 56 hat. Infolgedessen erhöht sich zunächst der Druck unterhalb des zweiten Diffusorelements 26, so daß als erstes das zweite Diffusorelement 26 angehoben wird. Durch diese Bewegung kann die Abdeckkappe 42 sich bereits an den Sollbruchstellen 66 öffnen.

Es ist aber auch möglich, daß das endgültige Öffnen der Abdeckkappe 42 erst durch die Entfaltung des Gassacks 56 bewirkt wird, der sich zu füllen beginnt, sobald der Rand 38 am Fuß des zweiten Diffusorelements 26 die Ausströmöffnungen 34 im ersten Diffusorelement 24 passiert und diese dadurch freigibt. Ab diesem Zeitpunkt kann Gas in den Gassack 56 strömen und beginnen, diesen zu entfalten.

In einer zweiten Variante ist das zweite Diffusorelement 26 wenigstens teilweise gasdurchlässig ausgebildet, indem (gestrichelt gezeigte) Ausströmöffnungen 70 vorgesehen sind, die stets einen Gasdurchtritt zum Gassack 56 erlauben. In diesem Fall strömt sofort Gas durch die Ausströmöffnungen 70 in den Gassack 56. Hier kann dann der sich entfaltende Gassack 56 auch zum Anheben des zweiten Diffusorelements 26 beitragen.

Zwischen dem ersten Diffusorelement 24 und dem zweiten Diffusorelement 26 ist eine Verdrehsicherung ausgebildet, die eine Bewegung der beiden Diffusorelemente 24, 26 gegeneinander in Umfangsrichtung U senkrecht zur Axialrichtung A verhindert. Die Umfangsrichtung U umfaßt hier sowohl eine Bewegung im Uhrzeigersinn als auch eine Bewegung im Gegenuhrzeigersinn bezogen auf die Axialrichtung A. So ist die endgültige räumliche Position des aufgeblasenen Gassacks sichergestellt, und eine Verdrehung des Zentrumsabschnitts 58 des Gassacks 56 gegenüber den radial außen liegenden Teilen des Gassacks 56 wird vermieden.

Um eine Relativbewegung der beiden Diffusorelemente 24, 26 in Umfangsrichtung U zu verhindern, ist hier die Umfangsgeometrie der Diffusorelemente 24, 26 in einer Ebene senkrecht zur Axialrichtung A abweichend von der Kreisform gewählt. An jedem der beiden Diffusorelemente 24, 26 sind Strukturen vorgesehen, die in eine Radialrichtung r weisen, wobei die Strukturen am zweiten Diffusorelemente 26 in die des ersten Diffusorelements 24 eingreifen oder umgekehrt.

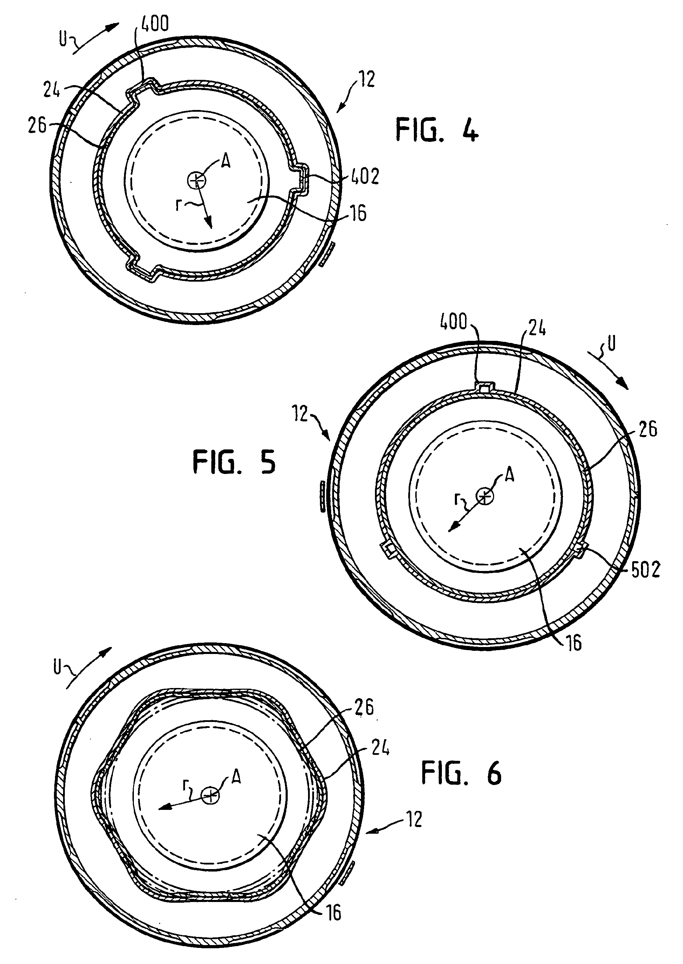

In dem in Figur 4 gezeigten Beispiel weisen sowohl das erste Diffusorelement 24 als auch das zweite Diffusorelement 26 jeweils drei über den Umfang verteilte radial nach außen gerichtete Vorsprünge 400 bzw. 402 auf, wobei der Vorsprung 402 des innen liegenden zweiten Diffusorelements 26 in den Vorsprung 400 des ersten Diffusorelements 24 eingreift und die Diffusorelemente 24, 26 in ihrer Form kongruent sowie koaxial miteinander angeordnet sind. In Axialrichtung A erstrecken sich die Vorsprünge 400, 402 über den gesamten Verschiebeweg d.

Die Durchmesserverhältnisse der Diffusorelemente 24, 26 sind so gewählt, daß das zweite Diffusorelement 26 beim Zurücklegen des Verschiebewegs d durch die Innenwand des ersten Diffusorelements 24 geführt wird.

Bei der in Figur 5 gezeigten Gestaltung der Diffusorelemente 24, 26 sind am Außenumfang des zweiten Diffusorelements 26 axial verlaufende Rippen 502 angeordnet, die die gleiche Funktion wie die oben geschriebenen Vorsprünge 402 erfüllen.

In Figur 6 ist ein Beispiel gezeigt, bei dem der gesamte Außenumfang beider Diffusorelemente 24, 26 zumindest im Bereich des Verschiebewegs d abweichend von der Kreisform gestaltet ist. Auch hier sind die Diffusorelemente 24, 26 in der dargestellten Schnittebene kongruent zueinander, und die Diffusorelemente sind koaxial miteinander angeordnet, wobei eine Außenseite des zweiten Diffusorelement 26 an einer Innenseite des ersten Diffusorelements 24 anliegt. In einer Ebene senkrecht zur Axialrichtung A weisen beide Diffusorelemente 24, 26 die Form eines sechszackigen Sterns mit abgerundeten Ecken auf. Im Bereich der von der Abdeckkappe 42 abgewandten, unteren Ränder 28, 38 ist der Querschnitt beider Diffusorelemente 24, 26 kreisförmig.

Die Strukturen, also die Vorsprünge 400, 402 oder die Rippen 502 bzw. die sternförmige Umfangskontur, sind hier durch eine Umformung der Wände der Diffusorelemente 24, 26 gefertigt. Natürlich können auch andere geeignete Verfahren zum Einsatz kommen. Die Rippen 502 können aber auch separate Elemente sein, die am zweiten Diffusorelement 26 befestigt sind. Genauso ist es auch möglich, die Vorsprünge 400, 402 radial nach innen auszuprägen.

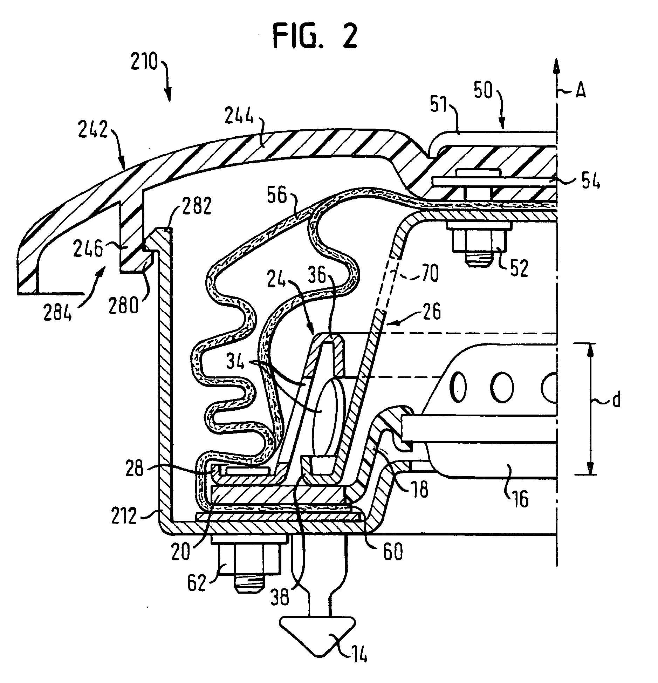

In Figur 2 ist eine zweite Ausführungsform gezeigt, bei deren Beschreibung im folgenden nur auf die Unterschiede zur ersten Ausführungsform eingegangen wird. Für zur ersten Ausführungsform identische Bauteile werden die bereits bekannten Bezugszeichen beibehalten.

In diesem Fall ist die Abdeckkappe 242 nicht mit Sollbruchstellen versehen, sondern in sich starr ausgebildet.

An den Seitenwänden 246, die senkrecht von der Stirnwand 244 der Abdeckkappe 242 abstehen, sind erste Rastelemente 280 ausgebildet, die in komplementäre Rastelemente 282 eingreifen, die am Rand von Seitenwänden des Modulgehäuses 212 ausgebildet sind. Die Rastelemente 280, 282 können z.B. als umlaufende Leisten gestaltet sein, die an den Seitenwänden 246 der Abdeckkappe 242 bzw. am Modulgehäuse 212 angeformt sind. Es können aber auch einzelne Rasthaken oder eine beliebige geeignete Kombination eingesetzt werden.

Bei der Aktivierung des Gassackmoduls 210 wird durch den sich im Inneren des Modulgehäuses 212 aufbauenden Druck die Rastverbindung 280, 282 gelöst. Das zweite Diffusorelement 26 wird um den Verschiebeweg d in Axialrichtung A angehoben, wobei die gesamte Abdeckkappe 242 um den Verschiebeweg d bewegt wird. Daraus resultiert eine Austrittsöffnung 284 für den Gassack 56 in Form eines ringförmigen Spalts zwischen dem Rand des Modulgehäuses 212 und dem Rand der Seitenwand 246 der Abdeckkappe 242.

Auch hier sind das erste und das zweite Diffusorelement 24, 26 z.B. über eine der oben beschriebenen Verdrehsicherungen an einer Relativbewegung in Umfangsrichtung U gehindert und so aufeinander abgestimmt, daß das erste Diffusorelement 24 das zweite Diffusorelement 26 während der Verschiebung um den Verschiebeweg d führt.

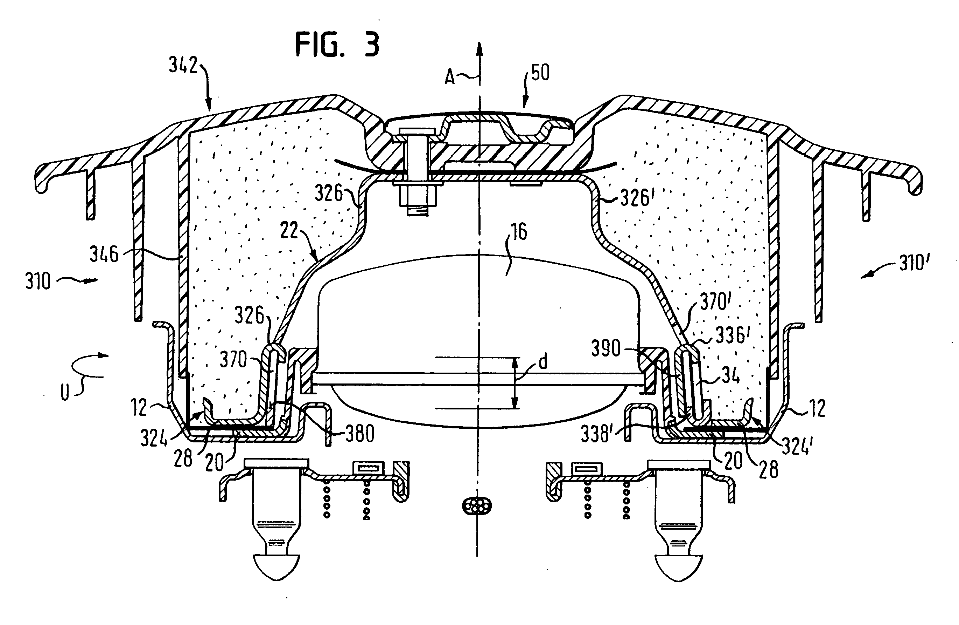

Bei dem in der linken Hälfte der Fig. 3 dargestellten Gassackmodul 310 gemäß einer dritten Ausführungsform der Erfindung sind am unteren, von der Abdeckkappe 342 abgewandten Ende des zweiten Diffusorelements 326 mehrere über den Umfang verteilte Ausströmöffnungen 370 vorgesehen. Im Bereich dieser Ausströmöffnungen 370 ist der obere Rand 336 des ersten Diffusorelements 324, der zur Abdeckkappe 342 gerichtet ist, radial nach innen umgebogen. Der Rand 336 ragt radial nach innen durch die Ausströmöffnungen 370 in das Innere des Diffusors 22 hinein und bildet so einen Anschlag für den unteren, von der Abdeckkappe 342 abgewandten Rand 380 der Ausströmöffnung 370 des zweiten Diffusorelements 326. In Umfangsrichtung U entspricht die Breite des Abschnitts des Randes 336 in etwa der Breite der Ausströmöffnung 370, so daß während der Bewegung des zweiten Diffusorelements 326 entlang des Verschiebewegs d zum einen eine Führung des zweiten Diffusorelements 326 erfolgt und zum anderen eine Relativbewegung der beiden Diffusorelemente 324, 326 in Umfangsrichtung U verhindert wird. Nachdem das zweite Diffusorelement 326 den Verschiebeweg d zurückgelegt hat und hierbei analog zur zweiten Ausführungsform die gesamte Abdeckkappe 342 um das Stück d angehoben hat, gelangt der untere Rand 380 der Ausströmöffnung 370 in Eingriff mit dem Rand 336 des ersten Diffusorelements 324, wodurch die Aufwärtsbewegung des zweiten Diffusorelements 326 in Axialrichtung A gestoppt wird.

Die Befestigung der Seitenwände 346 der Abdeckkappe 342 am Modulgehäuse 12 kann z.B. auf die in Fig. 2 gezeigte Art über eine lösbare Rastverbindung erfolgen.

Vor der Aktivierung des Gassackmoduls 310 ist das zweite Diffusorelement 326 am ersten Diffusorelement 324 befestigt. Die Befestigung ist so ausgeführt, daß sich im Normalbetrieb des Fahrzeugs, also vor der Aktivierung des Gassackmoduls 310, die beiden Diffusorelemente 324, 326 nicht voneinander lösen können, sch aber bei der Aktivierung des Gassackmoduls 310 die Befestigung ohne Zeitverzögerung öffnet und eine Bewegung des zweiten Diffusorelements 326 in Axialrichtung A ermöglicht. Diese Befestigung kann z.B. dadurch erfolgen, daß an einigen wenigen Stellen entlang der Umfangsrichtung U das zweite Diffusorelement 326 am ersten Diffusorelement 324 z.B. durch Crimpen im Bereich des unteren Randes 380 der Ausströmöffnung 370 verbunden ist.

Bei der hier gezeigten Ausführungsform weist das erste Diffusorelement 324 keine Ausströmöffnungen auf, und im zweiten Diffusorelement 326 sind nur die Ausströmöffnungen 370 in dessen unteren, von der Abdeckkappe 342 abgewandten Randbereich vorgesehen. Die Ausströmöffnungen 370 werden erst freigegeben, wenn das Anheben des zweiten Diffusorelements 326 beginnt. Nach Zurücklegen des Verschiebewegs d sind die Ausströmöffnungen 370 vollständig freigegeben.

In diesem Fall wird in der Anfangsphase zunächst das aus dem Gasgenerator 16 ausströmende Gas zunächst zum Anheben der Abdeckkappe 342 und Freigeben der Austrittsöffnung für den Gassack verwendet, bevor das Gas durch die Ausströmöffnungen 370 in den Gassack abströmen kann.

Bei der in der rechten Hälfte der Fig. 3 gezeigten Variante des dritten Ausführungsbeispiels ist die Höhe der Ausströmöffnungen 370' im zweiten Diffusorelement 326' so gewählt, daß auch im gezeigten Normalzustand vor Beginn der Verschiebung des zweiten Diffusorelements 326' ein Abschnitt der Ausströmöffnungen 370' freigegeben, daß heißt nicht vom ersten Diffusorelement 324' verdeckt ist. Der restliche Teil jeder Ausströmöffnung 370' wird erst während der Verschiebung des zweiten Diffusorelements 326' entlang des Verschiebewegs d freigegeben. In diesem Fall strömt bereits bei Beginn der Aktivierung des Gassackmoduls 310' ein Teil des freigesetzten Gases durch die Ausströmöffnungen 370' in den Gassack, so daß dieser zum Abheben der Abdeckkappe 342 mit beitragen kann.

Hier weist auch das erste Diffusorelement 324' Ausströmöffnungen 34 auf. Ein unterer, zum Boden des Modulgehäuses 12 gewandter, radial nach außen umgebogener Rand 338' des zweiten Diffusorelements 326' ragt durch die Ausströmöffnung 34 hindurch.

Der obere, zur Abdeckkappe 342 gewandten Rand 336' des ersten Diffusorelements 324' ist radial nach außen umgebogen. Hierbei sind in Umfangsrichtung U mehrere, zum Boden des Modulgehäuses 12 gerichtete Abschnitte 390 gebildet, deren Erstreckung in Axialrichtung A in etwa der Höhe der Ausströmöffnungen 34 entspricht.

Vor Beginn der Verschiebung des zweiten Diffusorelements 326' sind die Ausströmöffnungen 34 durch die Abschnitte 390 des ersten Diffusorelements 324' sowie durch die daran anliegenden Abschnitte des Randes 338' des zweiten Diffusorelements 326' annähernd gasdicht verschlossen. Während des Zurücklegens des Verschiebewegs d durch das zweite Diffusorelement 326' werden die Ausströmöffnungen 34 freigegeben.

Der Abschnitt des Randes 338' kommt nach Zurücklegen des Verschiebewegs d in Eingriff mit dem oberen, zur Abdeckkappe 342 gerichteten Rand 336' des ersten Diffusorelements 324', der einen Anschlag bildet.

Auch hier sind jeweils die Breite der Ausströmöffnung 370' und die des durch diese hindurchgreifenden Abschnitts 390 des Randes 336', jeweils in Umfangsrichtung U gesehen, so aufeinander abgestimmt, daß eine Relativbewegung des zweiten Diffusorelements 326' gegenüber dem ersten Diffusorelement 324' in Umfangsrichtung U verhindert ist und das zweite Diffusorelement 326' während des Zurücklegen des Verschiebewegs d durch das erste Diffusorelement 324' geführt ist.

An einigen wenigen Stellen entlang des Umfangs kann das zweite Diffusorelement 326' am ersten Diffusorelement 324' auf geeignete Weise lösbar befestigt sein, z.B. im Kontaktbereich zwischen dem Abschnitt 390 und dem Rand 338' durch Crimpen, Kleben oder ähnliches.

Alle Merkmale der verschiedenen Ausführungsformen und Varianten lassen sich im Ermessen des Fachmanns miteinander kombinieren.

## Patentansprüche

1. Gassackmodul, mit
einem Gassack (56) mit einer Vorderwand, wobei ein Zentrumsabschnitt (58) der Vorderwand an einem Teil des Gassackmoduls (10; 210) befestigt und bei einer Entfaltung des Gassacks (56) an einer freien Bewegung gehindert ist,
einem Diffusor (22), unter dem ein Gasgenerator (16) angeordnet ist, wobei der Diffusor (22) ein modulfestes erstes Diffusorelement (24; 324; 324') und ein gegenüber dem ersten Diffusorelement (24; 324; 324') um einen vorbestimmten begrenzten Verschiebeweg (d) in einer Axialrichtung (A) verschiebliches zweites Diffusorelement (26; 326; 326') aufweist, und
einer Abdeckkappe (42; 242; 342) mit einem mittleren Abschnitt (50), der über wenigstens ein Befestigungsmittel am zweiten Diffusorelement (26; 326, 326') befestigt ist,
wobei der Zentrumsabschnitt (58) zwischen dem mittleren Abschnitt (50) der Abdeckkappe (42; 242; 342) und einer Deckelplatte (40) des zweiten Diffusorelements (26; 326; 326') über eine Schraubverbindung (52) fest befestigt ist, **dadurch gekennzeichnet*,* daß**
die Diffusorelemente (24, 26; 324, 326; 324', 326') so ausgebildet sind, daß das zweite Diffusorelement (26; 326; 326') relativ zum ersten Diffusorelement (24; 324; 324') nicht in einer Umfangsrichtung (U) verschiebbar ist.

2. Gassackmodul nach Anspruch 1, **dadurch gekennzeichnet, daß** ein Abschnitt eines Diffusorelements (324; 324') durch eine am anderen Diffusorelement (326; 326') vorgesehene Ausströmöffnung (370; 370') hindurchgreift.

3. Gassackmodul nach einem der vorhergehenden Ansprüche, **dadurch gekennzeichnet, daß** die Diffusorelemente (24, 26) in einer Ebene senkrecht zur Axialrichtung (A) ineinandergreifende Strukturen aufweisen.

4. Gassackmodul nach Anspruch 3, **dadurch gekennzeichnet, daß** an den Diffusorelementen (24, 26) in eine Radialrichtung (r) weisende Vorsprünge (400, 402; 500, 402) ausgebildet sind.

5. Gassackmodul nach einem der vorhergehenden Ansprüche, **dadurch gekennzeichnet, daß** im ersten und/oder im zweiten Diffusorelement (24, 26; 324, 326) Ausströmöffnungen (34; 70; 370; 370') vorgesehen sind, die während der Verschiebung des zweiten Diffusorelements (26; 326) freigegeben werden.

6. Gassackmodul nach einem der vorhergehenden Ansprüche, **dadurch gekennzeichnet, daß** das zweite Diffusorelement (26) im wesentlichen gasdicht ausgebildet ist.

7. Gassackmodul nach einem der Ansprüche 1 bis 5, **dadurch gekennzeichnet, daß** das zweite Diffusorelement (26; 326') Ausströmöffnungen (70; 370') aufweist, die zumindest abschnittsweise nie vom ersten Diffusorelement (24; 324') verdeckt sind.

8. Gassackmodul nach einem der vorhergehenden Ansprüche, **dadurch gekennzeichnet, daß** das zweite Diffusorelement (326; 326') durch das erste Diffusorelement (324; 324') während der Bewegung entlang des Verschiebewegs (d) geführt wird.

9. Gassackmodul nach einem der vorhergehenden Ansprüche, **dadurch gekennzeichnet, daß** der mittlere Abschnitt (50) der Abdeckkappe (42) über Sollbruchstellen (66) oder Scharniere mit der restlichen Abdeckkappe (42) verbunden ist.

10. Gassackmodul nach einem Ansprüche 1 bis 8, **dadurch gekennzeichnet, daß** bei der Entfaltung des Gassacks (56) die gesamte Abdeckkappe (242; 342) angehoben wird.

11. Gassackmodul nach einem der vorhergehenden Ansprüche, **dadurch gekennzeichnet, daß** ein Abschnitt eines Generatorträgers und/oder ein Rand (60) einer Einblasöffnung des Gassacks (56) zwischen einem am ersten Diffusorelement (24; 324; 324') ausgebildeten Ring (28) und dem Modulgehäuse (12) geklemmt sind.

12. Gassackmodul nach einem der vorhergehenden Ansprüche, **dadurch gekennzeichnet, daß** der Gasgenerator (16) schwingend gelagert.

## Claims

1. A gas bag module comprising
a gas bag (56) having a front wall, a centre section (58) of the front wall being fastened to a part of the gas bag module (10; 210) and being prevented from a free movement upon deployment of the gas bag (56),
a diffusor (22) below which a gas generator (16) is arranged, the diffusor (22) having a first diffusor element (24; 324; 324') fixed to the module and a second diffusor element (26; 326; 326') displaceable with respect to the first diffusor element (24; 324; 324') in an axial direction (A) by a predetermined limited displacement path (d), and
a covering cap (42; 242; 342) having a central section (50) which is fastened to the second diffusor element (26; 326; 326') by at least one fastening means,
the centre section (58) being securely fastened between the central section (50) of the covering cap (42; 242; 342) and a cover plate (40) of the second diffusor element (26; 326; 326') by means of a screw connection (52), **characterized in that**
the diffusor elements (24, 26; 324, 326; 324', 326') are configured such that the second diffusor element (26; 326; 326') is not displaceable in a peripheral direction (U) relative to the first diffusor element (24; 324; 324').

2. The gas bag module according to Claim 1, **characterized in that** a portion of one diffusor element (324; 324') engages through an outflow opening (370; 370') provided on the other diffusor element (326; 326').

3. The gas bag module according to any of the preceding claims, **characterized in that** the diffusor elements (24, 26) have structures engaging into each other in a plane perpendicular to the axial direction (A).

4. The gas bag module according to Claim 3, **characterized in that** projections (400, 402; 500, 402) pointing in a radial direction (r) are formed on the diffusor elements (24, 26).

5. The gas bag module according to any of the preceding claims, **characterized in that** outflow openings (34; 70; 370; 370') are provided in the first and/or in the second diffusor element (24, 26; 324, 326), which are exposed during the displacement of the second diffusor element (26; 326).

6. The gas bag module according to any of the preceding claims, **characterized in that** the second diffusor element (26) is constructed so as to be substantially gas-tight.

7. The gas bag module according to any of Claims 1 to 5, **characterized in that** the second diffusor element (26; 326') has outflow openings (70; 370') which are at least partially never covered by the first diffusor element (24; 324').

8. The gas bag module according to any of the preceding claims, **characterized in that** the second diffusor element (326; 326') is guided by the first diffusor element (324; 324') during the movement along the displacement path (d).

9. The gas bag module according to any of the preceding claims, **characterized in that** the central section (50) of the covering cap (42) is connected with the remaining covering cap (42) by means of nominal fracture sites (66) or hinges.

10. The gas bag module according to any of Claims 1 to 8, **characterized in that** upon deployment of the gas bag (56) the entire covering cap (242; 342) is lifted.

11. The gas bag module according to any of the preceding claims, **characterized in that** a portion of a generator carrier and/or a rim (60) of an inflation opening of the gas bag (56) are clamped between a ring (28) formed on the first diffusor element (24; 324; 324') and the module housing (12).

12. The gas bag module according to any of the preceding claims, **characterized in that** the gas generator (16) is mounted so as to be capable of oscillating.

## Revendications

1. Module de coussin à gaz, comportant
un coussin à gaz (56) avec une paroi antérieure, un tronçon central (58) de la paroi antérieure étant fixé à une partie du module de coussin à gaz (10 ; 210) et empêché de se déplacer librement lors d'un déploiement du coussin à gaz (56),
un diffuseur (22) sous lequel est agencé un générateur de gaz (16), le diffuseur (22) présentant un premier élément de diffuseur (24 ; 324 ; 324') solidaire du module et un deuxième élément de diffuseur (26 ; 326 ; 326') déplaçable dans une direction axiale (A) par rapport au premier élément de diffuseur (24 ; 324 ; 324') de la valeur d'une course de déplacement (d) limitée prédéterminée, et
un couvercle (42 ; 242 ; 342) avec un tronçon médian (50) qui est fixé sur le deuxième élément de diffuseur (26 ; 326 ; 326') via au moins un moyen de fixation,
le tronçon central (58) étant fixé de manière solidaire via une liaison par vissage (52) entre le tronçon médian (50) du couvercle (42 ; 242 ; 342) et une plaque de couvercle (40) du deuxième élément de diffuseur (26 ; 326 ; 326'), **caractérisé en ce que**
les éléments de diffuseur (24, 26 ; 324, 326 ; 324', 326') sont réalisés de telle sorte que le deuxième élément de diffuseur (26 ; 326 ; 326') n'est pas déplaçable dans une direction périphérique (U) par rapport au premier élément de diffuseur (24 ; 324 ; 324').

2. Module de coussin à gaz selon la revendication 1, **caractérisé en ce qu'**un tronçon d'un élément de diffuseur (324 ; 324') passe à travers une ouverture d'échappement (370 ; 370') prévue sur l'autre élément de diffuseur (326 ; 326').

3. Module de coussin à gaz selon l'une des revendications précédentes, **caractérisé en ce que** les éléments de diffuseur (24, 26) présentent des structures s'engageant les unes dans les autres dans un plan perpendiculaire à la direction axiale (A).

4. Module de coussin à gaz selon la revendication 3, **caractérisé en ce que** sur les éléments de diffuseur (24, 26) sont réalisées des saillies (400, 402 ; 500, 502) tournées dans une direction radiale (r).

5. Module de coussin à gaz selon l'une des revendications précédentes, **caractérisé en ce que** dans le premier et/ou dans le deuxième élément de diffuseur (24, 26 ; 324, 326) sont prévues des ouvertures d'échappement (34 ; 70 ; 370 ; 370') qui sont dégagées pendant le déplacement du deuxième élément de diffuseur (26 ; 326).

6. Module de coussin à gaz selon l'une des revendications 1 à 5, **caractérisé en ce que** le deuxième élément de diffuseur (26) est réalisé sensiblement étanche aux gaz.

7. Module de coussin à gaz selon l'une des revendications 1 à 5, **caractérisé en ce que** le deuxième élément de diffuseur (26 ; 326') présente des ouvertures d'écoulement (70 ; 370') qui ne sont jamais recouvertes par le premier élément de diffuseur (24, 324'), au moins sur certains tronçons.

8. Module de coussin à gaz selon l'une des revendications précédentes, **caractérisé en ce que** le deuxième élément de diffuseur (326 ; 326') est guidé par le premier élément de diffuseur (324 ; 324') pendant le mouvement le long de la course de déplacement (d).

9. Module de coussin à gaz selon l'une des revendications précédentes, **caractérisé en ce que** le tronçon médian (5) du couvercle (42) est relié au reste du couvercle (42) par des emplacements destinés à la rupture ou par des charnières.

10. Module de coussin à gaz selon l'une des revendications 1 à 8, **caractérisé en ce que** l'ensemble du couvercle (242 ; 342) est soulevé lors du déploiement du coussin à gaz (56).

11. Module de coussin à gaz selon l'une des revendications précédentes, **caractérisé en ce qu'**un tronçon d'un support de générateur de gaz et/ou un bord (60) d'un orifice de soufflage du coussin à gaz (56) sont serrés entre une bague (28) réalisée sur le premier élément de diffuseur (24 ; 324 ; 324') et le boîtier de module (12).

12. Module de coussin à gaz selon l'une des revendications précédentes, **caractérisé en ce que** le générateur de gaz (16) est monté de manière à pouvoir osciller.
